# EUROPEAN PATENT APPLICATION

(11) **EP 4 397 591 A1**
(43) Date of publication of application: **10.07.2024**
(21) Application number: 24150165.9
(22) Date of filing: 03.01.2024
(51) Int. Cl.: B64D 29/06, B64D 45/00, B64D 47/02

(54) **LATCH ASSEMBLY FOR AN AIRCRAFT PROPULSION SYSTEM COWL**

(30) Priority: 03.01.2023 IN 202311000402
(71) Applicant: Rohr, Inc., Chula Vista, CA 91910-2098 (US)
(72) Inventor: BELLADA, Mruthyunjaya Shivayogi, 560064 Bangalore (IN); NELLAHALLI, Vishwanath, 560036 Bangalore (IN)
(74) Representative: Dehns

(57) **Abstract**

A cowl assembly (40) for an aircraft propulsion system (10) includes a first cowl door (46), a second cowl door (48), and a latch system (50). The first and second cowl doors (46) are pivotable. The latch system (50) includes at least one latch assembly (82) and a latch indicator light assembly (84). The at least one latch assembly (92) includes a first latch assembly portion (88) on the first cowl door (46) and a second latch assembly portion (92) on the second cowl door (48). The latch system (50) is configured to energize the latch indicator light assembly (84) to direct a latch indicator light (120) with one or more of the at least one latch assembly (82) in the unlatched condition and deenergize the latch indicator light assembly (84) with each of the at least one latch assembly (82) in the latched condition.

## Description

### TECHNICAL FIELD

This disclosure relates generally to a latch assembly for an aircraft propulsion system cowl, and more particularly to a latch indication assembly for identifying a latch condition.

### BACKGROUND

Propulsion systems, such as those used for aircraft, may include a nacelle configured to house internal propulsion system components (e.g., a gas turbine engine and other auxiliary systems). The nacelle may include one or more cowl sections (e.g., a fan cowl, a thrust reverser cowl, etc.). The cowl sections may include one or more movable cowl doors configured to provide access to the internal propulsion system components. The cowl doors may be secured during flight using a latch assembly. Various types and configurations of latch assemblies are known in the art. While these known latch assemblies have various advantages, there is still room in the art for improvement. There is a need in the art, therefore, for an improved latch assembly.

### SUMMARY

It should be understood that any or all of the features or embodiments described herein can be used or combined in any combination with each and every other feature or embodiment described herein unless expressly noted otherwise.

According to an aspect of the present disclosure, a cowl assembly for an aircraft propulsion system includes a fixed cowl portion, a first cowl door, a second cowl door, and a latch system. The first cowl door includes a first exterior side and a first interior side. The first exterior side and the first interior side extend between and to a first inner end and a first outer end. The first cowl door is pivotably mounted to the fixed cowl portion at the first inner end. The first cowl door is pivotable between a first open position and a first closed position. The second cowl door includes a second exterior side and a second interior side. The second exterior side and the second interior side extend between and to a second inner end and a second outer end. The second cowl door is pivotably mounted to the fixed cowl portion at the second inner end. The second cowl door is pivotable between a second open position and a second closed position. The latch system includes at least one latch assembly and a latch indicator light assembly. The at least one latch assembly includes a first latch assembly portion and a second latch assembly portion. The first latch assembly portion is disposed on the first cowl door at the first outer end. The second latch assembly portion is disposed on the second cowl door at the second outer end. The first latch assembly portion and the second latch assembly portion are cooperatively configurable in a latched condition of the at least one latch assembly or an unlatched condition of the at least one latch assembly. The latch indicator light assembly is disposed on the first interior side at the first outer end. The latch system is configured to energize the latch indicator light assembly to direct a latch indicator light with one or more of the at least one latch assembly in the unlatched condition and deenergize the latch indicator light assembly with each of the at least one latch assembly in the latched condition.

In an embodiment of the above, the first latch assembly portion may include a latch pin and the second latch portion may include a hook. The hook may be engaged with the latch pin in the latched condition.

In a further embodiment of any of the above, each of the at least one latch assembly may further include a proximity sensor disposed at (e.g., on, adjacent, or proximate) the first latch assembly portion. The proximity sensor may be configured to detect a presence of the hook engaged with the latch pin to identify the latched condition or the unlatched condition.

In a further embodiment of any of the above, the latch system may further include a controller. The controller may be in signal communication with the proximity sensor of each of the at least one latch assembly and the latch indicator light assembly. The controller may include a processor in communication with a non-transitory memory storing instructions, which instructions when executed by the processor, may cause the processor to: identify the latched condition or the unlatched condition of each of the at least one latch assembly based on a proximity sensor signal from the proximity sensor of each of the respective at least one latch assembly and control the latch indicator light assembly to energize the latch indicator light assembly with one or more of the at least one latch assembly in the unlatched condition.

In a further embodiment of any of the above, the first interior side and the second interior side may surround and form a cowl cavity of the cowl assembly and the energized latch indicator light assembly may be configured to direct the latch indicator light from the cowl cavity to an exterior of the cowl assembly.

In a further embodiment of any of the above, the energized latch indicator light assembly may be configured to direct the latch indicator light between the first outer end and the second outer end.

In a further embodiment of any of the above, the latch system may be disposed at a bottom vertical position of the cowl assembly and the energized latch indicator light assembly may be configured to direct the latch indicator light onto a projection surface vertically below the latch system.

In a further embodiment of any of the above, the energized latch indicator light assembly may be configured to direct the latch indicator light onto the projection surface laterally displaced from the latch system.

In a further embodiment of any of the above, the latch indicator light assembly may be configured to direct the latch indicator light to display a warning message.

In a further embodiment of any of the above, the at least one latch assembly may include a plurality of latch assemblies.

In a further embodiment of any of the above, the latch indicator light may be a red light.

According to another aspect of the present disclosure, a cowl assembly for an aircraft propulsion system includes a fixed cowl portion, a first cowl door, a second cowl door, and a latch system. The first cowl door includes a first exterior side and a first interior side. The first exterior side and the first interior side extend between and to a first inner end and a first outer end. The first cowl door is pivotably mounted to the fixed cowl portion at the first inner end. The first cowl door is pivotable between a first open position and a first closed position. The second cowl door includes a second exterior side and a second interior side. The second exterior side and the second interior side extend between and to a second inner end and a second outer end. The second cowl door is pivotably mounted to the fixed cowl portion at the second inner end. The second cowl door is pivotable between a second open position and a second closed position. The latch system includes a latch assembly and a latch indicator light assembly. The latch assembly includes a first latch assembly portion, a second latch assembly portion, and a proximity sensor. The first latch assembly portion is disposed on the first cowl door. The second latch assembly portion is disposed on the second cowl door. The proximity sensor is disposed on the first latch assembly portion. The proximity sensor is configured to generate a proximity sensor signal representative of an absence of the second latch assembly portion at the first latch assembly portion. The latch indicator light assembly disposed on the first interior side at the first outer end. The latch system is configured to energize the latch indicator light assembly to direct a latch indicator light in response to the proximity sensor signal representative of the absence of the second latch assembly portion at the first latch assembly portion.

In an embodiment of the above, the proximity sensor may be an inductive sensor.

In a further embodiment of any of the above, the first latch assembly portion may include a first housing. The first housing may include a first body side and a second body side. The first body side and the second body side may form a slot for the first latch assembly portion. The proximity sensor may be mounted on the latch housing at the second body side.

In a further embodiment of any of the above, the second body side may form a sensor aperture disposed coincident with the slot. The proximity sensor may be disposed at (e.g., on, adjacent, or proximate) the sensor aperture.

In a further embodiment of any of the above, the first latch assembly portion may include a latch pin and the second latch assembly portion may include a hook.

According to another aspect of the present disclosure, a cowl assembly for an aircraft propulsion system includes a first cowl door, a second cowl door, and a latch system. The first cowl door includes a first exterior side and a first interior side. The first exterior side and the first interior side extend between and to a first inner end and a first outer end. The second cowl door includes a second exterior side and a second interior side. The second exterior side and the second interior side extends between and to a second inner end and a second outer end. The latch system includes at least one latch assembly, a latch indicator light assembly, and a controller. The at least one latch assembly includes a first latch assembly portion, a second latch assembly portion, and a proximity sensor. The first latch assembly portion is disposed on the first cowl door. The second latch assembly portion is disposed on the second cowl door. The first latch assembly portion and the second latch assembly portion are cooperatively configurable in a latched condition of the at least one latch assembly or an unlatched condition of the at least one latch assembly. The proximity sensor is disposed on the first latch assembly portion. The proximity sensor is configured to generate a proximity sensor signal representative of a presence or an absence of the second latch assembly portion at the first latch assembly portion to identify the latched condition or the unlatched condition, respectively. The controller is in signal communication with the proximity sensor of each of the at least one latch assembly and the latch indicator light assembly. The controller includes a processor in communication with a non-transitory memory storing instructions, which instructions when executed by the processor, cause the processor to: identify the latched condition or the unlatched condition of each of the at least one latch assembly based on the proximity sensor signal and control the latch indicator light assembly: to energize the latch indicator light assembly to direct a latch indicator light with one or more of the at least one latch assembly in the unlatched condition and to deenergize the latch indicator light assembly with each of the at least one latch assembly in the latched condition.

In an embodiment of the above, the latch indicator light assembly may be configured to direct the latch indicator light onto a projection surface outside the cowl assembly to form a projection on the projection surface. The projection may include a word.

In a further embodiment of any of the above, the latch system may be disposed at a bottom vertical position of the cowl assembly and the energized latch indicator light assembly may be configured to direct the latch indicator light onto a projection surface vertically below the latch assembly.

In a further embodiment of any of the above, the energized latch indicator light assembly may be configured to direct the latch indicator light onto the projection surface laterally displaced from the latch assembly.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a perspective view of an aircraft including propulsion systems, in accordance with one or more embodiments of the present disclosure.
FIG. 2 illustrates a schematic, cutaway view of an aircraft propulsion system, in accordance with one or more embodiments of the present disclosure.
FIG. 3 illustrates a side view of a nacelle including a fan cowl assembly having cowl doors in a closed position, in accordance with one or more embodiments of the present disclosure.
FIG. 4 illustrates front, cutaway view of a nacelle including a fan cowl assembly having cowl doors in an open position, in accordance with one or more embodiments of the present disclosure.
FIG. 5 illustrates a schematic view of a portion of a latch system for a fan cowl assembly, in accordance with one or more embodiments of the present disclosure.
FIG. 6 illustrates a perspective view of a portion of a latch assembly for a latch system, in accordance with one or more embodiments of the present disclosure.
FIG. 7 illustrates a side, cutaway view of another portion of a latch assembly for a latch system, in accordance with one or more embodiments of the present disclosure.
FIG. 8 illustrates a perspective view of another portion of a latch assembly for a latch system, in accordance with one or more embodiments of the present disclosure.
FIG. 9 illustrates a front, cutaway view of a fan cowl assembly and its latch system having cowl doors in a closed position, in accordance with one or more embodiments of the present disclosure.
FIG. 10 illustrates a view of a projection surface having a latch indicator light projected thereon, in accordance with one or more embodiments of the present disclosure.

### DETAILED DESCRIPTION

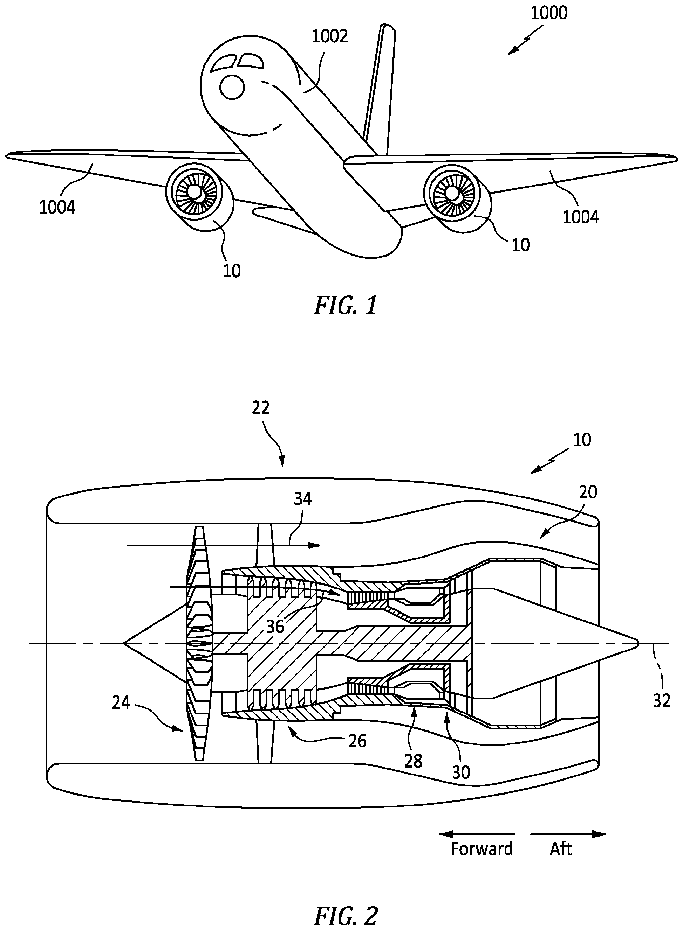

FIGS. 1 illustrates an aircraft 1000 including propulsion systems 10. The aircraft 1000 of FIG. 1 generally includes a fuselage 1002 and wings 1004 extending from the fuselage 1002. Each of the propulsion systems 10 of FIG. 1 are mounted to and below a respective wing 1004. The present disclosure, however, is not limited to any particular mounting configuration of the propulsion system 10 on an aircraft (e.g., the aircraft 1000).

FIG. 2 illustrates a side, cutaway view of an exemplary configuration of the propulsion system 10. The propulsion system 10 of FIG. 2 includes a gas turbine engine 20 and a nacelle 22. The gas turbine engine 20 of FIG. 2 is configured as a multi-spool turbofan gas turbine engine. However, it should be understood that aspects of the present disclosure may be equally applicable to other configurations of gas turbine engines such as, but not limited to, a turboshaft gas turbine engine, a turboprop gas turbine engine, a turbojet gas turbine engine, a propfan gas turbine engine, an open rotor gas turbine engine, or the like. Aspects of the present disclosure may also be equally applicable to other types of aircraft propulsion systems such as, but not limited to, an electric-fan propulsion system, an electric-prop propulsion system, or the like.

The gas turbine engine 20 of FIG. 2 includes a fan section 24, a compressor section 26, a combustor section 28, and a turbine section 30 extending sequentially along an axial centerline 32 of the propulsion system 10. The fan section 24 drives air along a bypass flow path 34 while the compressor section 26 drives air along a core flow path 36 for compression and communication into the combustor section 28 where the air is mixed with fuel and burned. Combustion gas from the combustor section 28 is directed through the turbine section 30. The turbine section 30 (e.g., one or more turbine rotors) drives rotation of components of the fan section 24 and the compressor section 26 in response the combustion gas flow.

The nacelle 22 is configured to house and provide an aerodynamic cover for the propulsion system 10. The nacelle 22 of FIG. 2 extends axially along the axial centerline 32. The nacelle 22 of FIG. 2 extends circumferentially about (e.g., completely around) the axial centerline 32 to surround the gas turbine engine 20 and form the bypass flow path 34.

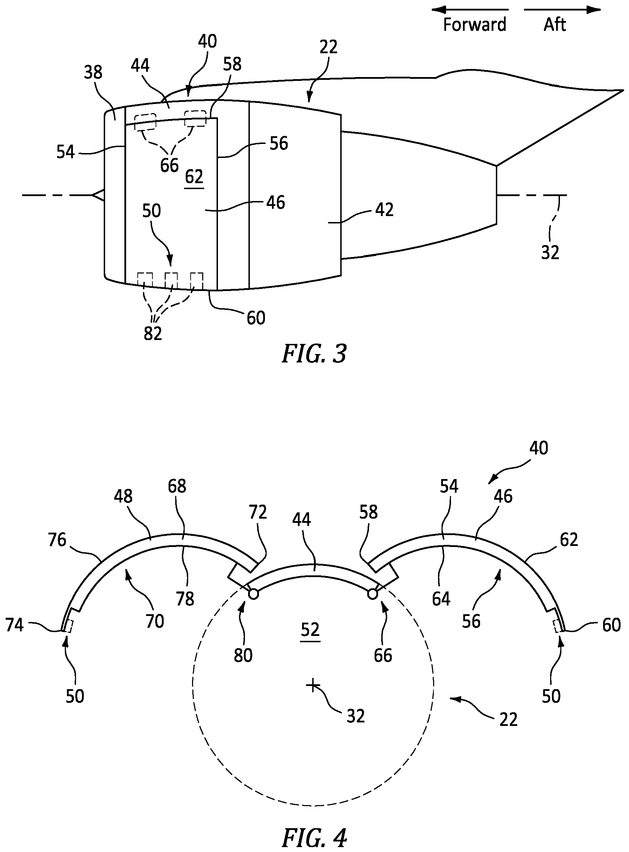

FIGS. 3 and 4 illustrate portions of the nacelle 22. The nacelle 22 of FIGS. 3 and 4 includes an air inlet portion 38, fan cowl assembly 40, and a thrust reverser portion 42. The air inlet portion 38, the fan cowl assembly 40, and the thrust reverser portion 42 extend circumferentially about (e.g., completely around) the axial centerline 32. The air inlet portion 38 is disposed at an axially forward end (e.g., a leading end) of the nacelle 22. The fan cowl assembly 40 is axially aft of the air inlet portion 38. The fan cowl assembly 40 is disposed axially coincident with the fan section 24 (see FIG. 2). The thrust reverser portion 42 is disposed axially aft of the cowl assembly 40. The thrust reverser portion 42 of FIGS. 3 and 4 may be movable (e.g., axially moveable) relative to the fan cowl assembly 40. For example, the thrust reverser portion 42 may be configured for axial translation along the axial centerline 32.

The fan cowl assembly 40 of FIGS. 3 and 4 includes a fixed cowl portion 44, a first cowl door 46, a second cowl door 48, and a latch system 50. Each of the first cowl door 46 and the second cowl door 48 are configured to move relative to surrounding portions of the nacelle 22 (e.g., the fixed cowl portion 44). For example, each of the first cowl door 46 and the second cowl door 48 are pivotable between an open position and a closed position. As used herein, the term "closed position" will be used to refer to the first cowl door 46 and/or the second cowl door 48 in a position so as to form a portion of a substantially continuous exterior surface of the nacelle 22 (e.g., the first cowl door 46 and/or the second cowl door 48 are positioned for flight). As used herein, the term "open position" will be used to refer to the first cowl door 46 and/or the second cowl door 48 in a position other than the closed position (e.g., the first cowl door 46 and/or the second cowl door 48 are partially open, fully open, etc.). In the open position, each of the first cowl door 46 and the second cowl door 48 are configured to allow access (e.g., for maintenance) to internal components of the propulsion system 10, for example, components of the fan section 24 (see FIG. 2). The fixed cowl portion 44, the first cowl door 46, and the second cowl door 48 form and surround a cowl cavity 52 of the fan cowl assembly 40.

The first cowl door 46 extends (e.g., axially extends) between and to a leading end 54 of the first cowl door 46 and a trailing end 56 of the first cowl door 46. The leading end 54 is disposed axially forward of the trailing end 56. The first cowl door 46 extends (e.g., circumferentially extends) between and to an inner end 58 of the first cowl door 46 and an outer end 60 of the first cowl door 46. The first cowl door 46 includes an exterior side 62 and an interior side 64 opposite the exterior side 62. Each of the exterior side 62 and the interior side 64 extend between and to the leading end 54, the trailing end 56, the inner end 58, and the outer end 60. The interior side 64 forms a portion of the cowl cavity 52. In the closed position of the first cowl door 46, the outer end 60 may be disposed at (e.g., on, adjacent, or proximate) a bottom vertical position of the fan cowl assembly 40 (e.g., a six o'clock position). However, the present disclosure is not limited to this particular configuration of the first cowl door 46. With the first cowl door 46 and the second cowl door 48 in their respective closed positions, the outer end 60 may be disposed at (e.g., on, adjacent, or proximate) the second cowl door 48. The first cowl door 46 includes one or more hinges 66. The hinges 66 pivotably mount the first cowl door 46 to the fixed cowl portion 44 at (e.g., on, adjacent, or proximate) the inner end 58. The hinges 66 may be configured, for example, as gooseneck hinges, however, the present disclosure is not limited to any particular configuration of the hinges 66.

The second cowl door 48 extends (e.g., axially extends) between and to a leading end 68 of the second cowl door 48 and a trailing end 70 of the second cowl door 48. The leading end 68 is disposed axially forward of the trailing end 70. The second cowl door 48 extends (e.g., circumferentially extends) between and to an inner end 72 of the second cowl door 48 and an outer end 74 of the second cowl door 48. The second cowl door 48 includes an exterior side 76 and an interior side 78 opposite the exterior side 76. Each of the exterior side 76 and the interior side 78 extend between and to the leading end 68, the trailing end 70, the inner end 72, and the outer end 74. The interior side 78 forms a portion of the cowl cavity 52. In the closed position of the second cowl door 48, the outer end 74 may be disposed at (e.g., on, adjacent, or proximate) a bottom vertical position of the fan cowl assembly 40 (e.g., a six o'clock position). However, the present disclosure is not limited to this particular configuration of the second cowl door 48. With the first cowl door 46 and the second cowl door 48 in their respective closed positions, the outer end 74 may be disposed at (e.g., on, adjacent, or proximate) the first cowl door 46. The second cowl door 48 includes one or more hinges 80. The hinges 80 pivotably mount the second cowl door 48 to the fixed cowl portion 44 at (e.g., on, adjacent, or proximate) the inner end 72. The hinges 80 may be configured, for example, as gooseneck hinges, however, the present disclosure is not limited to any particular configuration of the hinges 80.

FIGS. 3-5 illustrate portions of the latch system 50. The latch system 50 is configured to secure the first cowl door 46 and the second cowl door 48 together in the closed position. The latch system 50 of FIGS. 3-5 includes one or more latch assemblies 82 and a latch indicator light assembly 84. With the first cowl door 46 and the second cowl door 48 in the closed position, the latch assemblies 82 may be disposed at (e.g., on, adjacent, or proximate) a bottom vertical position of the fan cowl assembly 40 (e.g., a six o'clock position). However, the present disclosure is not limited to this particular configuration for the latch assemblies 82. The latch system 50 of FIGS. 3-5 includes three latch assemblies 82, however, the present disclosure is not limited to any particular number of latch assemblies 82 for the fan cowl assembly 40. The latch system 50 may additionally include a controller 86.

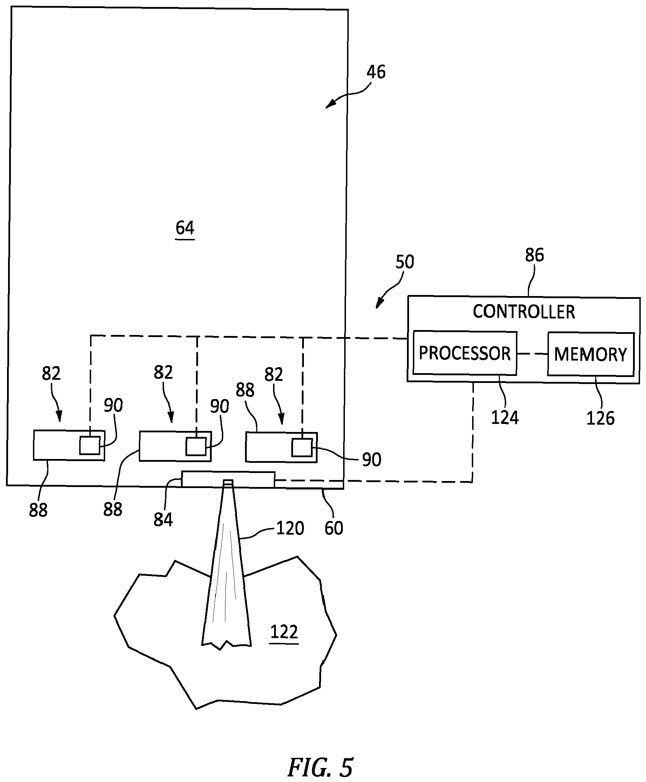

Referring to FIGS. 5-8, various portions of the latch assemblies 82 are illustrated. Each of the latch assemblies 82 includes a first latch assembly portion 88 (e.g., a keeper portion), a proximity sensor 90, and a second latch assembly portion 92 (e.g., a latch portion).

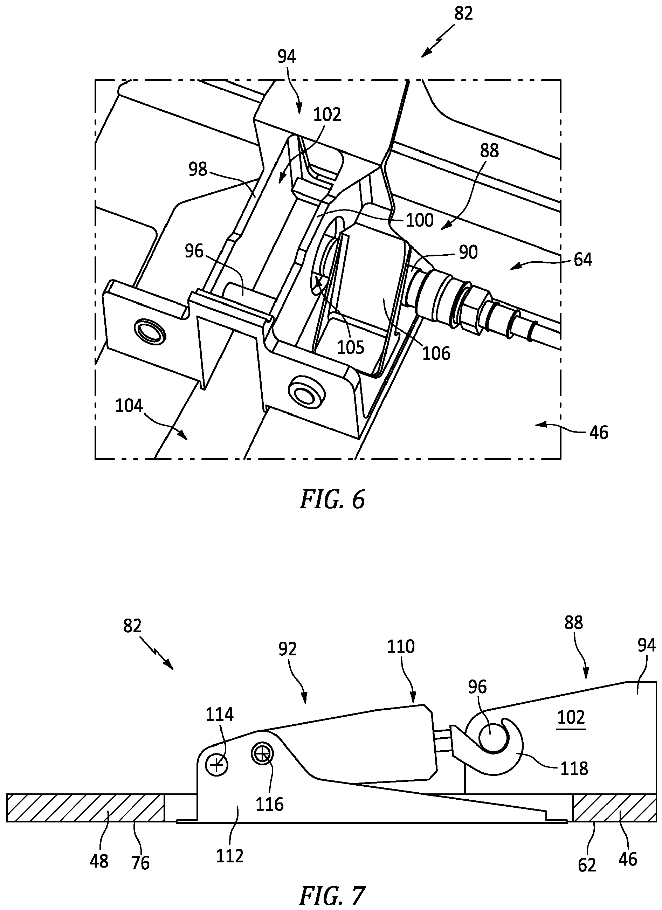

The first latch assembly portion 88 is mounted to the first cowl door 46. For example, the first latch assembly portion 88 may be mounted to the first cowl door 46 at (e.g., on, adjacent, or proximate) the outer end 60. FIG. 6 illustrates a perspective view of the first latch assembly portion 88. The first latch assembly portion 88 of FIG. 6 includes a housing 94 and a latch pin 96. The housing 94 is fixedly mounted to the first cowl door 46 (e.g., on the interior side 64), for example, using one or more fasteners or other attachment configurations. The housing 94 includes a first body side 98 and a second body side 100. The first body side 98 and the second body side 100 form a hook slot 102 of the first latch assembly portion 88 between the first body side 98 and the second body side 100. The hook slot 102 may disposed coincident with a hook slot 104 formed by the first cowl door 46 as shown, for example, in FIG. 6. The second body side 100 may form a sensor aperture 105 of the first latch assembly portion 88 through the second body side 100. The sensor aperture 105 is disposed coincident with the hook slot 102. The latch pin 96 is mounted to the first body side 98 and the second body side 100. The latch pin 96 extends lengthwise between the first body side 98 and the second body side 100 through the hook slot 102. The latch pin 96 may be configured as a pin, a shaft, a cylindrical body, or another lengthwise extending body.

The proximity sensor 90 is disposed at (e.g., on, adjacent, or proximate) the first latch assembly portion 88. The proximity sensor 90 of FIG. 6 is mounted on the first latch assembly portion 88 at the second body side 100. The proximity sensor 90 may be disposed within or at (e.g., on, adjacent, or proximate) the sensor aperture 105. As shown in FIG. 6, for example, the proximity sensor 90 may be mounted to the first latch assembly portion 88 by a mounting bracket 106 or another suitable mounting structure. The proximity sensor 90 is configured to detect the presence of a nearby object (e.g., the second latch assembly portion 92) without physical contact and to generate an electrical or electronic proximity sensor signal representative of the presence, absence, and/or relative proximity of the object. The proximity sensor 90 may be configured, for example, as an inductive proximity sensor. The proximity sensor 90 of the present disclosure, however, is not limited to an inductive proximity sensor, and alternative proximity sensors such as, but not limited to, a photoelectric sensor, an ultrasonic sensor, a capacitive sensor, and the like may be considered for the proximity sensor 90.

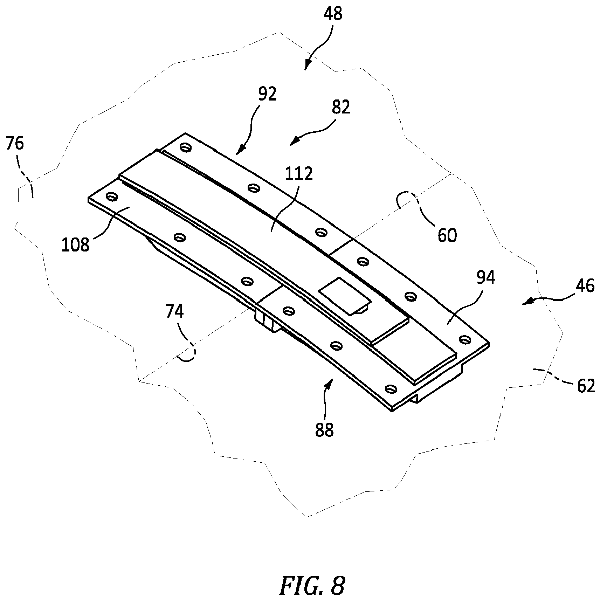

The second latch assembly portion 92 is mounted to the second cowl door 48. For example, the second latch assembly portion 92 may be mounted to the second cowl door 48 at (e.g., on, adjacent, or proximate) the outer end 74. FIG. 7 illustrates a side, cutaway view of the second latch portion 92 engaged with the first latch assembly portion 88. FIG. 8 illustrates an exterior, perspective view of the second latch assembly portion 92 engaged with the first latch assembly portion 88. The second latch assembly portion 92 of FIGS. 7 and 8 includes a housing 108, a hook 110, and a handle 112. The housing 108 is fixedly mounted to the second cowl door 48, for example, using one or more fasteners or other attachment configurations. The hook 110 (e.g., latch) is disposed within the housing 108. The hook 110 is pivotably mounted to the handle 112 at a pivot axis 114. The hook 110 includes a hook body 118 configured to be selectively engaged with the latch pin 96. The handle 112 is pivotably mounted to the housing 108 at the pivot axis 116. The handle 112 is configured to be pivoted about the pivot axis 116 (e.g., by maintenance personnel) to selectively engage the hook body 118 with the latch pin 96 or selectively disengage the hook body 118 from the latch pin 96. As shown in FIG. 8, the handle 112 may form a portion of the exterior side 62 and the exterior side 76.

FIGS. 7 and 8 illustrate the latch assembly 82 in a latched condition in which the first latch assembly portion 88 is engaged with the second latch assembly portion 92 to fixedly secure the first cowl door 46 and the second cowl door 48 together in their respective closed positions. The first latch assembly portion 88 and the second latch assembly portion 92 are cooperatively configurable in the latched condition of the latch assembly 82 or an unlatched condition of the latch assembly 82. As used herein, the term "latched condition" with respect to the latch assembly 82 is used to indicate that the latch assembly 82 is in a final condition for securing the first cowl door 46 and the second cowl door 48 in the closed position for flight. In this latched condition, the hook body 118 is engaged with the latch pin 96 as shown, for example, in FIG. 7. With the hook body 118 disposed within the hook slot 102 (see FIG. 6) and engaged with the latch pin 96, the proximity sensor 90 may detect the presence of the hook 110 (e.g., the hook body 118) engaged with the latch pin 96 to identify the latched condition of the latch assembly 82. As used herein, the term "unlatched condition" will be used to refer to the latch assembly 82 in a condition other than the latched condition. In the unlatched condition, the proximity sensor 90 may detect the absence of the hook 110 (e.g., the hook body 118) at (e.g., on, adjacent, or proximate) the latch pin 96 to identify the unlatched condition of the latch assembly 82. In other words, the proximity sensor 90 may not detect the presence of the hook 110 (e.g., the hook body 118) and may, therefore, identify the unlatched condition of the latch assembly 82.

FIG. 5 schematically illustrates a portion of the latch system 50 including the latch indicator light assembly 84. The latch indicator light assembly 84 of FIG. 5 is disposed on or otherwise mounted to the first cowl door 46. For example, the latch indicator light assembly 84 may be mounted to the interior side 64 at (e.g., on, adjacent, or proximate) the outer end 60. The latch indicator light assembly 84 is configured to be in an energized (e.g., illuminated) state or a deenergized (e.g., extinguished) state. The latch indicator light assembly 84 is in electrical communication with a power supply (not shown), which power supply may include, for example, a battery, a main or auxiliary generator of the propulsion system 10, an auxiliary power unit (APU), the controller 86, and/or any other suitable electrical power supply. When energized, the latch indicator light assembly 84 is configured to direct a latch indicator light 120 to provide a notification for maintenance personnel or other users or operators of the propulsion system 10 and/or the aircraft 1000 (see FIG. 1). For example, the latch indicator light assembly 84 is configured to direct the latch indicator light 120 from an interior (e.g., cowl cavity 52) of the fan cowl assembly 40 to an exterior of the fan cowl assembly 40, as will be discussed in further detail below (see FIG. 4). The latch indicator light assembly 84 may, therefore, project the latch indicator light 120 onto one or more projection surfaces 122 (e.g., the ground) outside the fan cowl assembly 40 and the propulsion system 10 where the projected latch indicator light may be observed by the maintenance personnel or other users or operators of the propulsion system 10 and/or the aircraft 1000. The latch indicator light assembly 84 may be configured with one or more lamps (e.g., light-emitting diode (LED) lamps, high-intensity lamps, lasers, etc.) of sufficient brightness and intensity to project the latch indicator light 120 onto the one or more projection surfaces 122 so as to be clearly visible by the maintenance personnel or other users or operators of the propulsion system 10 and/or the aircraft 1000. The latch indicator light 120 directed by the latch indicator light assembly 84 may be a red light. The use of a red light may facilitate suitable contrast on projection surfaces 122 such as, but not limited to, concrete, dirt, snow, etc. The use of a red light may also facilitate suitable visibility during both day and night conditions. The present disclosure, however, is not limited to any particular color for the latch indicator light 120. The latch indicator light assembly 84 may be configured to direct the latch indicator light 120 to project a notification such as, but not limited to, words, symbols, or other graphical indications, onto the one or more projection surfaces 122.

The controller 86 of FIG. 5 is connected in signal communication with the proximity sensor 90 for each latch assembly 82 and the latch indicator light assembly 84. The controller 86 includes a processor 124 and memory 126. The memory 126 is connected in signal communication with the processor 124. The processor 124 may include any type of computing device, computational circuit, or any type of process or processing circuit capable of executing a series of instructions that are stored in the memory 126, thereby causing the processor 124 to perform or control one or more steps or other processes. The processor 124 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. The instructions stored in memory 126 may represent one or more algorithms for controlling aspects of the latch system 50 or its latch indicator light assembly 84, and the stored instructions are not limited to any particular form (e.g., program files, system data, buffers, drivers, utilities, system programs, etc.) provided they can be executed by the processor 124. The memory 126 may be a non-transitory computer readable storage medium configured to store instructions that when executed by one or more processors, cause the one or more processors to perform or cause the performance of certain functions. The memory 126 may be a single memory device or a plurality of memory devices. A memory device may include a storage area network, network attached storage, as well a disk drive, a read-only memory, random access memory, volatile memory, non-volatile memory, static memory, dynamic memory, flash memory, cache memory, and/or any device that stores digital information. One skilled in the art will appreciate, based on a review of this disclosure, that the implementation of the controller 86 may be achieved via the use of hardware, software, firmware, or any combination thereof. The controller 86 may also include input and output devices (e.g., keyboards, buttons, switches, touch screens, video monitors, sensor readouts, data ports, etc.) that enable the operator to input instructions, receive data, etc.

The controller 86 may form or otherwise be part of an electronic engine controller (EEC) for the propulsion system 10. The EEC may control operating parameters of the gas turbine engine 20 including, but not limited to, fuel flow, stator vane position (e.g., variable compressor inlet guide vane (IGV) position), compressor air bleed valve position, etc. so as to control an engine power and/or thrust of the gas turbine engine 20. In some embodiments, the EEC may be part of a full authority digital engine control (FADEC) system for the propulsion system 10.

Cowl doors (e.g., fan cowl doors) for a propulsion system, such as the propulsion system 10 (see FIGS. 1 and 2), may be opened to allow maintenance personnel or other users or operators to access and perform maintenance, inspection, or other operations on the propulsion system internal components. The cowl doors may subsequently be closed and latched prior to operation (e.g., flight) of the propulsion system and its associated aircraft. For some aircraft configurations, the propulsion system(s) for the aircraft (e.g., a wing-mounted propulsion system) may be positioned with relatively little clearance between the propulsion system and the ground. As noted above, latches used to secure the cowl doors may also be disposed at a bottom vertical position (e.g., a six o'clock position) of the propulsion system. As such, it may be difficult, in at least some cases, for maintenance personnel or other users or operators to visually confirm that all of the latches used to secure the cowl doors are in a latched condition.

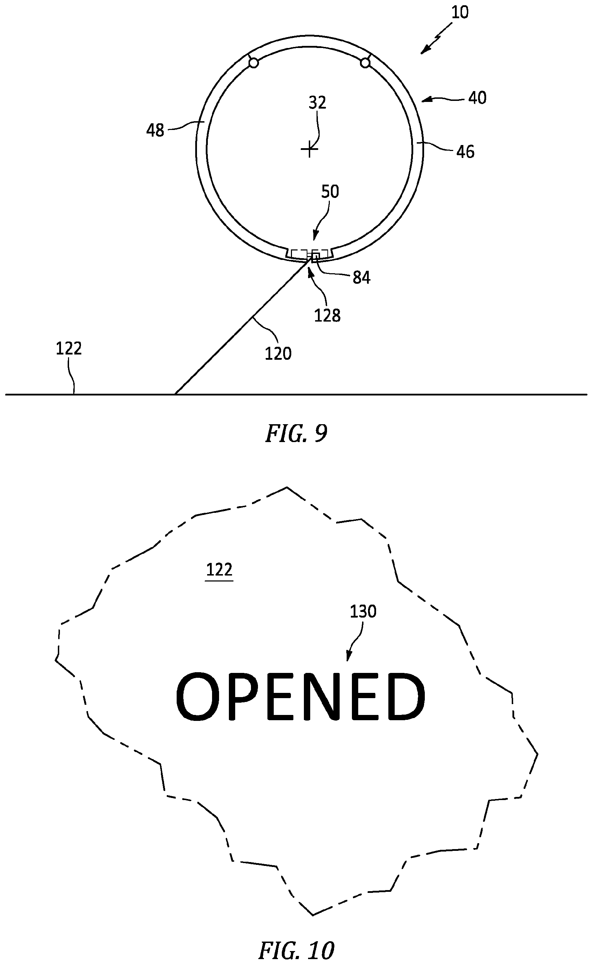

Referring to FIGS. 9 and 10, The latch system 50 of the present disclosure facilitates visual confirmation by maintenance personnel or other users or operators that the latches 82 (e.g., all of the latches 82, see FIGS. 3 and 5-8) for the latch system 50 are in the latched condition. FIG. 9 illustrates a front, cutaway view of a portion of the propulsion system 10 with the fan cowl assembly 40 and its first cowl door 46, second cowl door 48, and latch system 50. The latch system 50 (e.g., the controller 86, see FIG. 5) is configured to energize the latch indicator light assembly 84 to direct the latch indicator light 120 with one or more of the latch assemblies 82 for the latch system 50 in the unlatched condition. The latch system 50 (e.g., the controller 86) is configured to deenergize the latch indicator light assembly 84 with each of the latch assemblies 82 for the latch system 50 in the latched condition. For example, the memory 126 may include instructions which, when executed by the processor 124, cause the processor 124 to identify the latched condition or the unlatched condition of each of the latch assemblies 82 based on the proximity sensor signal from the proximity sensor 90 of each of the latch assemblies 82 (see FIGS. 5 and 6). The instructions, when executed by the processor 124, may cause the processor 124 to control the latch indicator light assembly 84 to energize the latch indicator light assembly 84 (e.g., direct the latch indicator light 120) when one or more of the latch assemblies 82 are in the unlatched condition. The instructions, when executed by the processor 124, may cause the processor 124 to control the latch indicator light assembly 84 to deenergize the latch indicator light assembly 84 when all of the latch assemblies 82 are in the latched condition.

FIG. 9 illustrates the latch indicator light assembly 84 directing the latch indicator light 120 onto a projection surface 122 (e.g., the ground) to visually indicate that one or more of the latch assemblies 82 are in an unlatched condition. As shown in FIG. 9, with the first cowl door 46 and the second cowl door 48 positioned in their respective closed positions, the first cowl door 46 and the second cowl door 48 may form a gap 128 (e.g., a circumferential gap) between the outer end 60 and the outer end 74 (see FIG. 4). The latch indicator light assembly 84 may direct the latch indicator light 120 through the gap 128 onto the projection surface 122 disposed vertically below the latch system 50. The latch indicator light assembly 84 may direct the latch indicator light 120 toward the projection surface 122 in a lateral direction (e.g., perpendicular to the axial centerline 32) where the projected latch indicator light 120 can be viewed (e.g., by maintenance personnel or other users or operators) on the projection surface 122 unobstructed by the propulsion system 10.

FIG. 10 illustrates a projection 130 of the latch indicator light 120 on the projection surface 122. As shown in FIG. 10, the projection 130 forms a notification including the word "OPENED" indicating to maintenance personnel or other users or operators that one or more of the latches 82 are in an unlatched condition. Of course, use of the word "OPENED" for the projection 130 is exemplary and the present disclosure is not limited to use of the word "OPENED" for the projection 130.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A cowl assembly (40) for an aircraft propulsion system (10), the cowl assembly (40) comprising:
a fixed cowl portion (44);
a first cowl door (46) including a first exterior side (62) and a first interior side (64), the first exterior side (62) and the first interior side (64) extending between and to a first inner end (58) and a first outer end (60), the first cowl door (46) pivotably mounted to the fixed cowl portion (44) at the first inner end (58), the first cowl door (46) pivotable between a first open position and a first closed position;
a second cowl door (48) including a second exterior side (76) and a second interior side (78), the second exterior side (76) and the second interior side (78) extending between and to a second inner end (72) and a second outer end (74), the second cowl door (48) pivotably mounted to the fixed cowl portion (44) at the second inner end (72), the second cowl door (48) pivotable between a second open position and a second closed position; and
a latch system (50) including at least one latch assembly (82) and a latch indicator light assembly (84), the at least one latch assembly (82) including a first latch assembly portion (88) and a second latch assembly portion (92), the first latch assembly portion (88) disposed on the first cowl door (46) at the first outer end (60), the second latch assembly portion (92) disposed on the second cowl door (48) at the second outer end (74), the first latch assembly portion (88) and the second latch assembly portion (92) cooperatively configurable in a latched condition of the at least one latch assembly (82) or an unlatched condition of the at least one latch assembly (82), the latch indicator light assembly (84) disposed on the first interior side (64) at the first outer end (60), the latch system (50) configured to:
energize the latch indicator light assembly (84) to direct a latch indicator light (120) with one or more of the at least one latch assembly (82) in the unlatched condition; and
deenergize the latch indicator light assembly (84) with each of the at least one latch assembly (82) in the latched condition.

2. The cowl assembly of claim 1, wherein the first latch assembly portion (88) includes a latch pin (96) and the second latch assembly portion (92) includes a hook (110), the hook (110) engaged with the latch pin (96) in the latched condition.

3. The cowl assembly of claim 2, wherein each of the at least one latch assembly (82) further includes a proximity sensor (90) disposed at the first latch assembly portion (88), the proximity sensor (90) configured to detect a presence of the hook (110) engaged with the latch pin (96) to identify the latched condition or the unlatched condition.

4. The cowl assembly of claim 3, wherein the latch system (50) further includes a controller (86), the controller (86) in signal communication with the proximity sensor (90) of each of the at least one latch assembly (82) and the latch indicator light assembly (84), the controller (86) including a processor (124) in communication with a non-transitory memory (126) storing instructions, which instructions when executed by the processor (124), cause the processor (124) to:
identify the latched condition or the unlatched condition of each of the at least one latch assembly (82) based on a proximity sensor signal from the proximity sensor (90) of each of the respective at least one latch assembly (82); and
control the latch indicator light assembly (84) to energize the latch indicator light assembly (84) with one or more of the at least one latch assembly (82) in the unlatched condition.

5. A cowl assembly (40) for an aircraft propulsion system (10), the cowl assembly (40) comprising:
a fixed cowl portion (44);
a first cowl door (46) including a first exterior side (62) and a first interior side (64), the first exterior side (62) and the first interior side (64) extending between and to a first inner end (58) and a first outer end (60), the first cowl door (46) pivotably mounted to the fixed cowl portion (44) at the first inner end (58), the first cowl door (46) pivotable between a first open position and a first closed position;
a second cowl door (48) including a second exterior side (76) and a second interior side (78), the second exterior side (76) and the second interior side (78) extending between and to a second inner end (72) and a second outer end (74), the second cowl door (48) pivotably mounted to the fixed cowl portion (44) at the second inner end (74), the second cowl door (48) pivotable between a second open position and a second closed position; and
a latch system (50) including at least one latch assembly (82) and a latch indicator light assembly (84), the at least one latch assembly (82) including a first latch assembly portion (88), a second latch assembly portion (92), and a proximity sensor (90), the first latch assembly portion (88) disposed on the first cowl door (46), the second latch assembly portion (92) disposed on the second cowl door (48), the proximity sensor (90) disposed on the first latch assembly portion (88), the proximity sensor (90) configured to generate a proximity sensor signal representative of an absence of the second latch assembly portion (92) at the first latch assembly portion (88), the latch indicator light assembly (84) disposed on the first interior side (64) at the first outer end (60), the latch system (50) configured to energize the latch indicator light assembly (84) to direct a latch indicator light (120) in response to the proximity sensor signal representative of the absence of the second latch assembly portion (92) at the first latch assembly portion (88).

6. The cowl assembly of claim 5, wherein the first latch assembly portion (88) includes a latch pin (96) and the second latch assembly portion includes a hook (110).

7. The cowl assembly of any of claims 3 to 6, wherein the proximity sensor (90) is an inductive sensor.

8. The cowl assembly of any of claims 3 to 7, wherein the first latch assembly portion (88) includes a first housing (94), the first housing (94) including a first body side (98) and a second body side (100), the first body side (98) and the second body side (100) forming a slot (102) for the first latch assembly portion (88), the proximity sensor (90) mounted on the first housing (94) at the second body side (100).

9. The cowl assembly of claim 8, wherein the second body side (100) forms a sensor aperture (105) disposed coincident with the slot (102), the proximity sensor (90) disposed at the sensor aperture (105).

10. The cowl assembly of any preceding claim, wherein the first interior side (64) and the second interior side (78) surround and form a cowl cavity (52) of the cowl assembly (40), and the energized latch indicator light assembly (84) is configured to direct the latch indicator light (120) from the cowl cavity (52) to an exterior of the cowl assembly (40).

11. The cowl assembly of claim 10, wherein the energized latch indicator light assembly (84) is configured to direct the latch indicator light (120) between the first outer end (60) and the second outer end (74).

12. The cowl assembly of claim 10 or 11, wherein the latch indicator light assembly (84) is configured to direct the latch indicator light (120) onto a projection surface (122) outside the cowl assembly (40) to form a projection (130) on the projection surface (122), the projection (130) including a word.

13. The cowl assembly of claim 10, 11 or 12, wherein the latch system (50) is disposed at a bottom vertical position of the cowl assembly (40), and the energized latch indicator light assembly (84) is configured to direct the latch indicator light (120) onto a or the projection surface (122) vertically below the latch system (50), optionally wherein the energized latch indicator light assembly (84) is configured to direct the latch indicator light (120) onto the projection surface (122) laterally displaced from the latch system (50).

14. The cowl assembly of any preceding claim, wherein the latch indicator light assembly (84) is configured to direct the latch indicator light (120) to display a warning message, and/or wherein the latch indicator light (120) is a red light.

15. The cowl assembly of any preceding claim, wherein the at least one latch assembly (82) includes a plurality of latch assemblies (82).
